# EUROPÄISCHE PATENTSCHRIFT

(11) **EP 0 759 848 B1**
(45) Veröffentlichungstag und Bekanntmachung des Hinweises auf die Patenterteilung: **03.06.1998**
(21) Anmeldenummer: 96907426.9
(22) Anmeldetag: 11.03.1996
(51) Int. Cl.: B29C 67/00

(54) **VORRICHTUNG UND VERFAHREN ZUM HERSTELLEN EINES DREIDIMENSIONALEN OBJEKTES MITTELS LASERSINTERN**
DEVICE AND PROCESS FOR PRODUCING A THREE-DIMENSIONAL OBJECT BY LASER SINTERING
PROCEDE ET DISPOSITIF PERMETTANT DE PRODUIRE UN OBJET EN TROIS DIMENSIONS PAR FRITTAGE AU LASER

(30) Priorität: 20.03.1995 DE 29504746 U
(43) Veröffentlichungstag der Anmeldung: 05.03.1997
(73) Patentinhaber: EOS GmbH ELECTRO OPTICAL SYSTEMS, 82152 Planegg (DE)
(72) Erfinder: WILKENING, Christian, D-86911 Diessen (DE); MATTES, Thomas, D-82229 Hechendorf (DE)
(74) Vertreter: Prüfer, Lutz H., Dipl.-Phys.
(86) Internationale Anmeldenummer: EP9601034
(87) Internationale Veröffentlichungsnummer: WO9629192

(56) Entgegenhaltungen:
- DE-A- 4 439 124
- DE-C- 4 300 478
- US-A- 5 135 379
- US-A- 5 139 711
- US-A- 5 263 130
- PATENT ABSTRACTS OF JAPAN vol. 14, no. 164 (M-0957), 30.März 1990 & JP,A,02 024127 (MITSUI ENG & SHIPBUID CO LTD), 26.Januar 1990, siehe Zusammenfassung; Abbildung

## Beschreibung

Die Erfindung betrifft Vorrichtungen und ein Verfahren zum Herstellen eines dreidimensionalen Objektes nach den Oberbegriffen der Patentansprüche 1, 6 und 10.

Aus der JP-A-02-024127 ist eine Vorrichtung zum Herstellen eines dreidimensionalen Objektes durch aufeinanderfolgendes Verfestigen von Schichten bekannt. Es wird dabei ein Harzgemisch verwendet, das aus einem thermisch verfestigbarem Harz und einem optisch verfestigbarem Harz besteht. Das Objekt wird schichtweise durch Verfestigen des optisch verfestigbaren Harzes gebildet. Danach wird das Objekt aus der Vorrichtung entnommen und mittels Wärme wird dann das thermisch verfestigbare Harz ausgehärtet und somit das Objekt fertiggestellt.

Eine Vorrichtung nach dem Oberbegriff der Patentansprüche 1, 6 und 10 ist aus der DE 43 00 478 C1 bekannt.

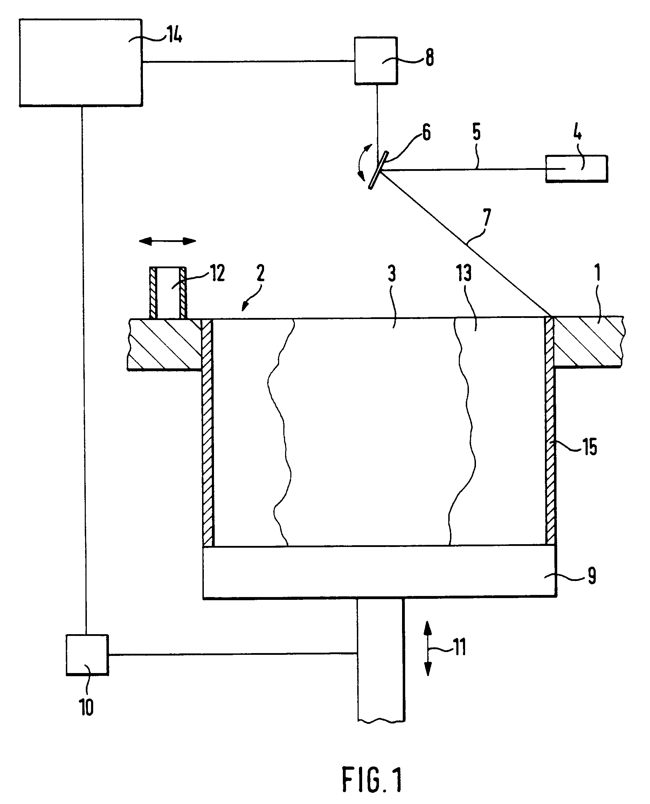

Wie aus Fig. 1 ersichtlich ist, weist die bekannte Vorrichtung einen im wesentlichen horizontal angeordneten Arbeitstisch 1 mit einem Loch in Form eines Ausschnittes 2 auf. Der Ausschnitt 2 ist großer als die größte Querschnittsfläche eines herzustellenden Objektes 3. Oberhalb des Arbeitstisches 1 ist eine Bestrahlungseinrichtung 4 in Gestalt eines Lasers angeordnet, die einen gerichteten Lichtstrahl 5 abgibt. Dieser wird über eine Ablenkeinrichtung 6 als abgelenkter strahl 7 auf die Ebene des Arbeitstisches 1 abgelenkt. Eine Steuerung 8 steuert die Ablenkeinrichtung derart, daß der abgelenkte Strahl 7 auf jede gewünschte Stelle innerhalb des vom Ausschnitt 2 definierten Arbeitsbereiches auftrifft.

Unterhalb des Ausschnittes 2 ist eine ebenfalls im wesentlichen horizontal angeordnete Unterlage 9 in Form einer Plattform vorgesehen, die mittels einer Höheneinstellvorrichtung 10 in Richtung des Pfeiles 11 zwischen einer höchsten Stellung, in der die Oberfläche der Unterlage 9 innerhalb des Ausschnittes 2 und im wesentlichen in derselben Höhe wie die Oberfläche des Arbeitstisches 1 liegt, und einer tiefsten Stellung, in der der Abstand zwischen der Unterlage und dem Arbeitstisch größer als die maximale Höhe des Objektes 3 ist, verschiebbar ist.

Eine Vorrichtung 12 zum Aufbringen einer gleichmäßigen Schicht eines pulverförmigen, durch Einwirkung elektromagnetischer Strahlung verfestigbaren Materiales 13, die beispielsweise als Vorratsbehälter mit Wischer zum Glätten der Schicht ausgebildet ist, ist horizontal über den Arbeitstisch 1 über den Ausschnitt 2 bewegbar.

Die Steuerung 8 und die Höheneinstellvorrichtung 10 sind jeweils mit einer zentralen Steuereinheit 14 zur koordinierten Steuerung dieser Vorrichtungen verbunden.

Der Betrieb einer derartigen Vorrichtung zum Herstellen eines dreidimensionalen Objektes ist unter dem Namen Lasersinterverfahren bekannt.

Im Betrieb wird in einem ersten Schritt die Unterlage 9 mittels der Höheneinstellvorrichtung 10 in die höchste Stellung gefahren, in der die Oberfläche der Unterlage 9 in einer Ebene mit der Oberfläche des Arbeitstisches 1 liegt und anschließend um den Betrag der vorgesehen Dicke der ersten Materialschicht abgesenkt, so daß innerhalb des Ausschnittes 2 ein abgesenkter Bereich gebildet ist, der seitlich von den Wänden des Ausschnittes 2 und unten von der Oberfläche der Unterlage 9 begrenzt ist. Dann wird eine erste Schicht des Materiales 13 mittels der Vorrichtung 12 mit der vorgesehenen Schichtdicke in dem vom Ausschnitt 2 und der Unterlage 9 gebildeten Hohlraum aufgebracht und geglättet. Daraufhin steuert die Steuereinheit 14 die Ablenkeinrichtung 6 über deren Steuerung derart, daß der abgelenkte Lichtstrahl 7 an solchen Stellen der Schicht auftrifft, die entsprechend von in der Steuereinheit 14 gespeicherten Koordinaten des Objektes 3 verfestigt werden sollen und dort das Material sintert. Anschließend wird die Steuereinheit 14 derart gesteuert, daß der abgelenkte Lichtstrahl nur auf den an die Innenfläche des Ausschnittes 2 angrenzenden Bereich der Materialschicht auftrifft und dort die Materialschicht durch Sintern verfestigt, wodurch eine erste ringförmige Wandschicht entsteht, die das verbleibende pulverförmige Material der Schicht vollständig umgibt.

Es ist auch möglich, die erste auf die Unterlage 9 aufgebrachte Schicht des Materiales komplett durch den Laserstrahl zu verfestigen, so daß eine feste Bodenschicht gebildet wird.

In weiteren Schritten wird jeweils die Unterlage 9 um den Betrag der Schichtdicke der nächsten Schicht abgesenkt, und dann wie im ersten Schritt verfahren. Dadurch, daß bei der Herstellung jeder Objektschicht eine ringförmige Wandschicht auf die darunterliegende ringförmige Wandschicht aufgesintert wird, entsteht ein ringförmiger Wandbereich 15 in Form einer Behälterwand, der das Objekt 3 zusammen mit dem verbleibenden nicht gesinterten Material 13 umschließt und so beim Absenken der Unterlage 9 unter den Arbeitstisch 1 ein Austreten des Materiales 13 verhindert. Die Schritte werden so oft wiederholt, bis das Objekt 3 fertiggestellt ist.

Die mitverfestigte Behälterwand 15 hält unverfestigtes Pulver 13 an seinem Platz. Somit wirkt das unverfestigte Pulver als Stütze für darüberliegende Schichten. Werden zusätzlich zu der zylinderförmigen Behälterwand 15 noch ein Boden und ein Deckel mitverfestigt, so können lange Abkühlzeiten für das gebildete Objekt in der Lasersinteranlage vermieden werden, da das Objekt komplett mit seinem Behälter aus der Anlage entfernt werden kann und zum Abkühlen an einen separaten Ort gebracht werden kann.

Das bekannte Verfahren weist jedoch die folgenden Nachteile auf. Die Behälterwand 15 stellt ein separates Bauteil dar, welches Schicht für Schicht bestrahlt werden muß. Dadurch wird die Bauzeit unnötig lang. Normalerweise verschlechtert sich die Fokussierung des Laserstrahles am Rand, also in dem Bereich, in dem die Behälterwand verfestigt werden soll. Somit ist der sichere Bau einer stabilen Behälterwand schwierig.

Ein weiterer Nachteil besteht darin, daß die mit dem Laser erzeugte Behälterwand beim Verfestigen jeder Schicht des Objektes mitverfestigt wird, so daß sie für den Wischer 12, der mit einem gewissen Druck über die Oberfläche der Schicht streicht, ein Hindernis darstellt, wobei sie bei jedem Neubeschichtungsvorgang beschädigt werden kann.

Für den Fall, daß auch die erste Schicht auf der Unterlage 9 als Bodenschicht vollständig durch den Laserstrahl verfestigt wird, erfordert die Herstellung der komplett verfestigten Bodenschicht durch den Laser jedoch sehr viel Zeit.

Ferner ergibt sich bei dem oben beschriebenen Lasersinterverfahren ohne eine vollständige Verfestigung der ersten auf die Unterlage aufgebrachten Schicht das folgende Problem. Die Unterlage, die üblicherweise aus einer Metallplattform besteht, muß exakt parallel zu der Ebene der Bewegung des Abstreifers justiert werden, damit die Pulverschichten über die gesamte Fläche eine gleichmäßige Dicke aufweisen. Diese Justierung ist in der Praxis gerade bei kleinen Schichtdicken nicht ausreichend genau möglich.

Ferner kann das bekannte Verfahren nicht bei Verwendung von kunstharzbeschichtetem Formsand als zu verfestigendes Material durchgeführt werden, da bei Bestrahlung mit dem Laserstrahl keine dünne, aber dennoch ausreichend stabile Behälterwand erzeugt werden kann.

Es ist Aufgabe der Erfindung, eine Vorrichtung zum Herstellen eines dreidimensionalen Objektes bereitzustellen, mit der das Bauteil in kurzer Zeit und mit größerer Genauigkeit als bisher hergestellt werden kann.

Die Aufgabe wird gelöst durch die Vorrichtung nach Patentanspruch 1, 6 oder 10.

Weiterbildungen sind in den Unteransprüchen gegeben.

Die Vorrichtung hat den Vorteil, daß eine Bestrahlungszeit für die Behälterwand bzw. den Rahmen entfällt. Das führt zu einer hohen Zeitersparnis. Insbesondere ist die Vorrichtung für die Verwendung von Formsand als zu verfestigendes Material geeignet.

Ferner hat die Vorrichtung den Vorteil, daß sie die Herstellung einer Bodenschicht mit exakt parallel zur Abstreiferebene liegender Oberfläche innerhalb kurzer Zeit ermöglicht. Die so erzeugte Bodenschicht kann als Fundament für die Verankerung des Objektes dienen.

Weitere Merkmale und Zweckmäßigkeiten ergeben sich aus der Beschreibung von Ausführungsbeispielen anhand der Figuren.

Von den Figuren zeigen:
- Fig. 1: eine schematische Querschnittansicht einer bekannten Vorrichtung zum Herstellen eines dreidimensionalen Objektes mittels Lasersinterns;
- Fig. 2: eine schematische Querschnittansicht einer Ausführungsform der erfindungsgemäßen Vorrichtung zur Durchführung des Verfahrens;
- Fig. 3: eine schematische Querschnittansicht einer Ausführungsform einer beheizbaren Unterlage;
- Fig. 4: eine Draufsicht in Richtung des Pfeiles A auf die beheizbare Unterlage von Fig. 3 entlang der Schnittlinie I - I von Fig. 3; und
- Fig. 5: eine Querschnittansicht einer weiteren Ausführungsform des Arbeitstisches mit Heizeinrichtung.

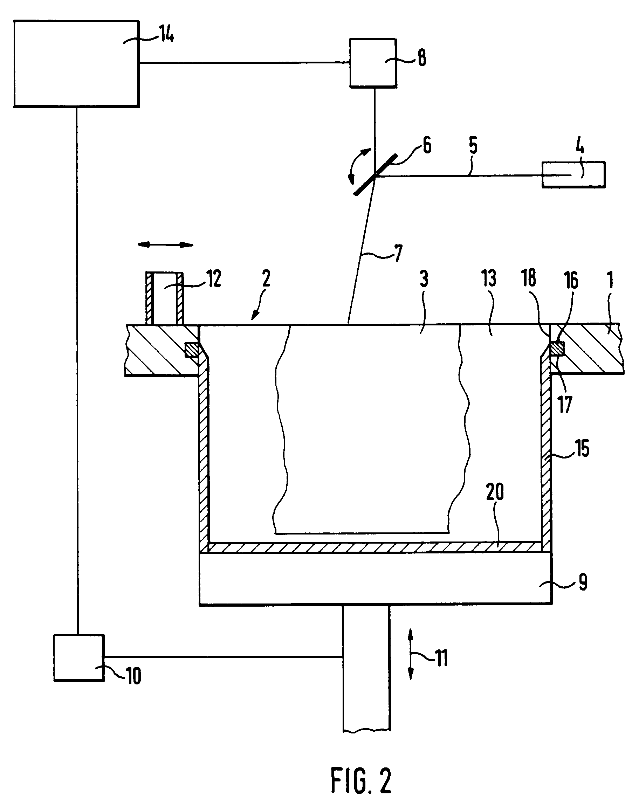

Wie aus Fig. 2 ersichtlich ist, weist die erfindungsgemäße Vorrichtung dieselben Komponenten wie die in Fig. 1 dargestellte Vorrichtung auf. Daher wird die Beschreibung von Komponenten mit gleichen Bezugszeichen hier nicht wiederholt.

Zusätzlich weist die Vorrichtung einen Heizring 16 beispielsweise in Form einer Heizspirale auf, welcher in einer Ausnehmung 17 in einer den Ausschnitt 2 begrenzenden Wand 18 des Arbeitstisches 1 angeordnet ist. Dabei ist die Heizspirale 16 so in die Ausnehmung 17 eingepaßt, daß sie formschlüssig mit der Wand 18 abschließt. Die Ausnehmung 17 an dem Arbeitstisch 1 befindet sich nicht direkt an der Arbeitsoberfläche, die durch den Auftreffpunkt des Laserstrahles 7 auf die Oberfläche des Materiales 13 definiert ist, sondern einige Zentimeter unterhalb der Arbeitsoberfläche. Die Unterlage 9 ist bei der Vorrichtung beheizbar, so daß jeweils die ersten auf die Unterlage 9 aufgebrachten Schichten des Materiales 13 durch Wärmeeinwirkung verfestigt werden können.

Im Betrieb wird zunächst wie bei der bekannten Vorrichtung die Unterlage 9 mittels der Höheneinstellvorrichtung 10 in die höchste Stellung gefahren, in der die Oberfläche der Unterlage 9 in einer Ebene mit der Oberfläche des Arbeitstisches 1 liegt, und anschließend um den Betrag der vorgesehenen Dicke der ersten Materialschicht abgesenkt, so daß innerhalb des Ausschnittes 2 ein abgesenkter Bereich gebildet ist, der seitlich von der Wandung 18 des Ausschnittes 2 und unten von der Oberfläche der Unterlage 9 begrenzt ist. Mittels der Aufbringvorrichtung 12 wird sodann eine erste Schicht von pulverförmigem, sinterbarem Material 13, beispielsweise Formsand, welcher aus Quarzsand mit Phenolharzüberzug besteht, mit der vorgesehenen Schichtdicke in den vom Ausschnitt 2 und der Unterlage 9 gebildeten abgesenkten Bereich eingebracht.

Dann wird, abweichend vom Stand der Technik, die Unterlage 9 so beheizt, daß die so aufgebrachte erste Schicht durch Wärmeeinwirkung (sintert und somit) verfestigt wird. Auf diese Weise wird zunächst eine feste Bodenschicht 20 gebildet. Die erforderliche Temperatur zur Verfestigung beträgt je nach Material zwischen 80 °C und 160 °C.

In einem zweiten Schritt wird die Unterlage 9 mittels der Höheneinstellvorrichtung 10 von der Steuereinheit 14 um den Betrag mindestens einer Schichtdicke abgesenkt und mittels der Aufbringvorrichtung 12 in den damit entstehenden abgesenkten Bereich innerhalb des Ausschnittes 2 eine Menge des Formsandes 13 entsprechend mindestens einer Schichtdicke eingebracht und geglättet. Somit befindet sich über der verfestigten Bodenschicht 20 mindestens eine Schicht unverfestigten Materiales 13.

Nach Absenken der Unterlage um den Betrag der Schichtdicke der nächsten Schicht, Aufbringen und Glätten des Materiales 13 kann nun die Herstellung des Objektes 3 selbst beginnen. Hierzu steuert die Steuereinheit 14 die Ablenkeinrichtung 6 derart, daß der abgelenkte Lichtstrahl 7 an solchen Stellen der Schicht auftrifft, die entsprechend den in der Steuereinheit 14 gespeicherten Koordinaten des Objektes 3 verfestigt werden sollen.

Sobald dabei durch Absenken der Unterlage 9 das das Objekt 3 umgebende, unverfestigte Material 13 in den Bereich der Heizspirale 16 gelangt, wird ein das Objekt 3 und das noch unverfestigte Material 13 umgebender ringförmiger Bereich des Materiales 13 durch Wärmeeinwirkung über Wärmeleitung verfestigt. Der ringförmige Bereich weist dabei eine vertikale Ausdehnung von mehreren schichtdicken auf, entsprechend der vertikalen Ausdehnung der Ausnehmung 17 bzw. der Heizspirale 16. Da die Unterlage 9 vor dem Verfestigen einer neuen Schicht des Objektes 3 jeweils um eine Schichtdicke, die beispielsweise in dem Bereich von wenigen Zehntelmillimetern liegt, abgesenkt wird, befinden sich jeweils mehrere Schichten für einen längeren Zeitraum im Einflußbereich der Wärmeeinwirkung der Heizspirale 16. Somit wird die Behälterwand 15 kontinuierlich aus übereinanderliegenden ringförmigen Bereichen des an die Wand 18 des Ausschnittes 2 angrenzenden Formsandes 13 verfestigt. Die Zeit, in der sich der Formsand im Wirkungsbereich der Heizspirale 16 aufhält, beträgt je nach Baugeschwindigkeit zwischen 20 Minuten und einer Stunde. Die Heizspirale hat davon abhängig eine Temperatur von 80 °C bis 160 °C. Je schneller der Bauprozeß stattfindet, d. h. je kürzer sich das Material 13 im Heizbereich befindet, desto höher muß die Temperatur gewählt werden.

Formsand ist als Material besonders geeignet, da bei diesem keine Verklebung zwischen dem Formsand und der Heizspirale stattfindet.

Die so gebildete Behälterwand verhindert beim Absenken der Unterlage 9 unter den Arbeitstisch 1 ein Austreten des Materiales 13. Dadurch, daß die Behälterwand 15 sich nicht bis zur Arbeitsoberfläche erstreckt, wie es bei der herkömmlichen Verfestigung der Behälterwand mittels Lasereinwirkung der Fall ist, stellt die Behälterwand kein Hindernis für den Wischer der Aufbringvorrichtung 12 bei einem Neubeschichtungsvorgang dar. Da die Wärmeeinwirkung auf den zu verfestigenden Randbereich getrennt von der Bestrahlung der Schichten erfolgt, kann die beim bekannten Verfahren notwendige Bestrahlungszeit eingespart werden. Die Zeitersparnis beträgt etwa 20 s pro Schicht.

Nach Fertigstellung der letzten Objektschicht wird die Behälterwand 15 mit den oben beschriebenen Schritten weiter verfestigt, so daß sie das Objekt 3 um einige Schichtdicken überragt und anschließend wird mittels Bestrahlung mit dem Laser 4 eine Deckelschicht 21 verfestigt, die zusammen mit der Bodenschicht 20 und der Behälterwand 15 einen das Objekt 3 und das verbleibende ungesinterte Material 13 dicht einschließenden Behälter bildet.

Der Behälter mit dem darin enthaltenen Objekt 3 kann sodann von der Unterlage 9 abgenommen werden und zum Abkühlen an einen separaten Ort gebracht werden, so daß sofort wieder mit der Herstellung eines neuen Objektes begonnen werden kann.

Modifikationen sind möglich. So kann die Herstellung der Bodenschicht 20 und/oder der Deckelschicht 21 entfallen. Dies ist insbesondere dann geeignet, wenn das Objekt in der Anlage abkühlen soll und eine sichere Abkühlung - auch des dann freiliegenden Restpulvers - im Behälter 15 möglich ist. Alternativ kann die Bodenschicht 20 auch durch Bestrahlung mit dem Laser verfestigt werden. Die Aufbringvorrichtung 12 kann auch als Walze, als Schieber oder als Besen oder in jeder zum Aufbringen einer gleichmäßigen Schicht aus pulverförmigem Material geeigneten Weise ausgebildet sein. Der Querschnitt des Ausschnittes 2 muß nicht notwendigerweise kreisförmig sein, er kann auch quadratisch oder rechteckig sein oder jede beliebige Form aufweisen. Anstelle der Verwendung einer Heizspirale ist es auch möglich, den Arbeitstisch über die gesamte Dicke zu beheizen oder eine Wärmelampe zu verwenden. Ferner kann die Verfestigung einer Deckelschicht auch durch Wärmeeinwirkung über das Auflegen eines beheizbaren Deckels auf die Behälterwand oder durch Bestrahlung der obersten unverfestigten Schicht mit einer Wärmelampe erfolgen.

Die Vorrichtung ist nicht nur für die Verwendung von Formsand geeignet, sondern es kann auch kunststoffummanteltes Keramik- oder Metallpulver verwendet werden. Es ist auch möglich, als zu verfestigendes Material ein lichtaushärtbares Polymer zu verwenden. Ferner kann als Bestrahlungseinrichtung jede andere Strahlungsquelle für elektromagnetische Strahlung, die einen gerichteten Lichtstrahl mit zum Sintern ausreichender Energie abgibt, wie beispielsweise eine UV-Lampe, verwendet werden. Auch die Bestrahlung mittels Elektronenstrahlen aus einer Elektronenstrahlquelle ist denkbar.

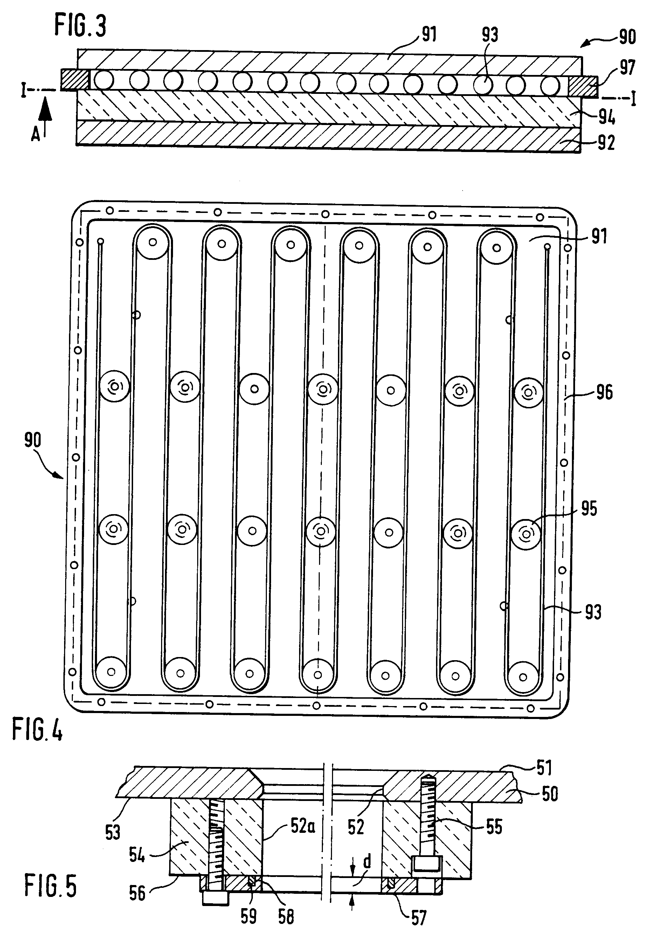

Eine Ausführungsform der beheizbaren Unterlage 9 ist in den Figuren 3 und 4 gezeigt. Die Sintervorrichtung gemäß Fig. 2 weist hierzu einen quadratischen Ausschnitt 200 in ihrem Arbeitstisch 1 auf. Die Unterlage 9 ist in Form einer im wesentlichen quadratischen Plattform 90, deren Querschnitt etwas geringer als der des Ausschnittes ist, ausgebildet. Die Plattform 90 weist eine Deckplatte 91 und eine Bodenplatte 92 auf, wobei die Platten aus einem gut wärmeleitfähigen Material, insbesondere aus Aluminium angefertigt sind. Die Unterlage 9 ist in der Lasersintervorrichtung so angeordnet, daß die Deckplatte 91 dem Objekt zugewandt ist. Zwischen der Deckplatte 91 und der Bodenplatte 92 ist eine Heizeinrichtung zum Heizen der Deckplatte 91 in Form eines Heizdrahtes 93 vorgesehen. Der Heizdraht 93 ist unmittelbar unter der Deckplatte 91 angeordnet und steht in Kontakt mit dieser. An seiner der Deckplatte 91 abgewandten Seite ist der Heizdraht durch eine wärmeisolierende Platte 94, beispielsweise aus Dotherm 500 thermisch gegen die Bodenplatte 92 isoliert. Somit wird die von dem Heizdraht 93 erzeugte Wärme an die Deckplatte 91 abgegeben. Der Heizdraht 93 weist einen Durchmesser von ca. 2 mm auf und ist in der Plattenebene über den gesamten Querschnitt der Platte in Form von mäanderförmigen Windungen, wie insbesondere in Fig. 4 ersichtlich ist, angeordnet. Die Länge und der gegenseitige Abstand der Windungen wird durch eine Mehrzahl von an der Unterseite der Deckplatte befestigten Distanzscheiben 95, um die der Heizdraht jeweils herumgeschlungen ist, bestimmt. Durch die mäanderförmige Führung des Heizdrahtes 93 und die gute Wärmeleitfähigkeit der Deckplatte 91 wird gewährleistet, daß die Temperaturverteilung über der Deckplatte 91 fast konstant ist. Die Heizleistung des Heizdrahtes beträgt etwa 840 W.

Zwischen der Deckplatte 91 und der wärmeisolierenden Platte 94 ist eine am Rand 96 der Plattform umlaufende Dichtlippe 97 aus Silikon vorgesehen. Die Dichtlippe 97 dient zur Abdichtung des Zwischenraumes zwischen dem Rand 96 der Plattform und der den Ausschnitt 200 begrenzenden Wand, wenn sich die Plattform 90 zum Aufbringen und Verfestigen der ersten Pulverschichten noch innerhalb des Ausschnittes 200 des Arbeitstisches befindet. Die Dichtlippe 97 verhindert somit ein Hindurchtreten von Pulver bzw. Formsand beim Aufbringen der ersten Schichten.

Im Betrieb wird bei Verwendung der beheizbaren Plattform 90 eine Bodenschicht aus verfestigbarem Material, insbesondere aus Formsand, deren Dicke einige Schichtdicken des herzustellenden Objektes 3 und vorzugsweise etwa 3 bis 5 cm beträgt, aufgebracht und durch die beheizbare Plattform 90 für ca. 5 bis 10 Minuten aufgeheizt, wobei Verfestigung eintritt. Die so hergestellte Bodenschicht dient als Fundament für die Verankerung des Objektes 3, was bei einer Verfestigung des Objektes 3 direkt auf der metallischen Plattform oder auf einer nur eine Schichtdicke aufweisende Bodenschicht nicht möglich ist.

Fig. 5 zeigt eine weitere Ausführungsform der erfindungsgemäßen Heizeinrichtung zum Verfestigen der Behälterwand 15. Der Arbeitstisch ist als Platte 50 ausgebildet, deren Oberseite 51 dem Laserstrahl 7 bzw. der Aufbringvorrichtung 12 zugewandt ist. Die Platte 50 weist in ihrer Mitte einen kreisförmigen Ausschnitt 52 auf, durch den die höhenverstellbare Unterlage 9 in vertikaler Richtung verschiebbar ist. Angrenzend an die der Oberseite 51 abgewandte Unterseite 53 der Platte ist eine wärmeisolierende Platte 54, beispielsweise aus Dotherm 1100, mit einem zu dem kreisförmigen Ausschnitt 52 der Arbeitsplatte 50 koaxialen kreisförmigen Ausschnitt 52a mit demselben Durchmesser wie dem des Ausschnittes 52 vorgesehen. Die wärmeisolierende Platte 54 ist an der Unterseite 53 der Platte 50 über eine Mehrzahl von Schrauben 55 befestigt. An dem der Unterseite 53 der Platte 50 abgewandten Ende 56 der wärmeisolierenden Platte ist ein Heizring 57 vorgesehen, dessen Innendurchmesser dem Durchmesser des kreisförmigen Ausschnittes 52 bzw. 52a entspricht. Der Außendurchmesser des Heizringes 57 ist etwas geringer als der Durchmesser der wärmeisolierenden Platte 54. Der Heizring 57 ist in Form eines Kupferringes ausgebildet und weist an seiner der Unterseite 56 der wärmeisolierenden Platte 57 zugewandten Seite eine ringförmige Ausnehmung bzw. Nut 58 mit rechteckigem Querschnitt auf. In der ringförmigen Ausnehmung 58 ist ein Heizdraht 59 vorgesehen. Der Durchmesser der ringförmigen Ausnehmung 58 ist etwas größer als der Durchmesser des kreisförmigen Ausschnittes 52. Der Heizring 57 weist in vertikaler Richtung eine Dicke d auf, die beim jeweiligen Absenken der Unterlage 9 in dem kreisförmigen Ausschnitt 52 die Höhe des mittels Wärmeeinwirkung des zu verfestigenden ringförmigen Wandbereiches bestimmt.

Zum Steuern und Regeln der Heizleistung des Heizdrahtes ist eine speicherprogrammierbare Steuerung SPS vorgesehen.

Im Betrieb übergibt diese einem in der zentralen Steuereinheit 14 enthaltenen Rechner ein Signal, wenn mit dem Beschichten, d. h. dem Auftragen einer neuen Pulverschicht begonnen wird. Der Rechner mißt die Zeit zwischen zwei bei aufeinanderfolgenden Beschichtungsvorgängen erzeugten Signalen und bestimmt daraus die Belichtungsdauer tₛ der Schicht. Unter der Annahme, daß die Belichtungsdauer für die darauf folgende Schicht genauso groß sein wird, wird die Heizleistung P_{H} über den Heizstrom des Heizdrahtes 59 so geregelt, daß die durch den Heizring in das Material eingebrachte Wärmeenergie P_{H}*tₛ über eine Mehrzahl von Schichten hin konstant ist. Da sich jeweils eine Mehrzahl von Schichten im Bereich der Wärmeeinwirkung des Heizringes 57 befinden, wird eine eventuell bei einer Schicht zu große oder zu geringe Wärmezufuhr während der Verfestigung der nächsten Schicht wieder ausgeglichen. Die Regelung der Heizleistung erfolgt also integrierend über eine Mehrzahl von Schichten. Damit wird bewirkt, daß eine Behälterwand mit im wesentlichen konstanter Wandstärke erzeugt wird.

Alternativ kann die Regelung der Heizleistung auch so erfolgen, daß beim Eintreffen des Signales, das bei einer Neubeschichtung erzeugt wird, der Heizstrom auf einen festen Wert Iₘₐₓ eingestellt wird und anschließend linear abgesenkt wird, bis das Signal für den nachfolgenden Beschichtungsvorgang gemessen wird. Über die Höhe von Iₘₐₓ und die Steigung des linearen Abfalles des Heizstromes während der Belichtungszeit wird wiederum eine über mehrere Schichten integrierende Regelung des Heizstromes erreicht.

## Patentansprüche

1. Vorrichtung zum Herstellen eines dreidimensionalen Objektes durch aufeinanderfolgendes Verfestigen von Schichten eines mittels elektromagnetischer Strahlung oder Teilchenstrahlung verfestigbaren Materials an den dem jeweiligen Querschnitt des Objektes entsprechenden Stellen, mit
einer höheneinstellbaren Unterlage (9),
einer Vorrichtung zum Aufbringen (12) einer Schicht des verfestigbaren Materiales (13) auf die Unterlage (9) oder auf eine zuvor gebildete Schicht,
einer Bestrahlungseinrichtung (4) und
einer Steuerung für die Bestrahlungseinrichtung (8) zum Bestrahlen von den dem Objekt (3) entsprechenden Stellen der Schicht, und
einer Heizeinrichtung (16) zum Verfestigen eines das Objekt (3) umschließenden Bereiches des Materiales (13) durch Wärmeeinwirkung, wobei ein Arbeitstisch (50) mit einem den umschließenden Bereich (15) entsprechenden Ausschnitt (52) vorgesehen ist,
dadurch gekennzeichnet, daß die Heizeinrichtung einen unterhalb des Arbeitstisches (50) angeordneten und von diesem thermisch isolierten Heizring (57) umfaßt, der eine der Kontur des Ausschnittes (52) des Arbeitstisches (50) entsprechende Innenkontur aufweist und der so angeordnet ist, daß der Heizring den Ausschnitt (52) umgibt.

2. Vorrichtung nach Anspruch 1, dadurch gekennzeichnet, daß der Innendurchmesser des Heizringes (57) dem Durchmesser des Ausschnittes (52) entspricht.

3. Vorrichtung nach Anspruch 1 oder 2, dadurch gekennzeichnet, daß die Unterlage (9) in eine Position anhebbar ist, in der ihre Oberfläche innerhalb des Ausschnittes (52) im wesentlichen in einer Ebene mit der Oberfläche des Arbeitstisches (50) liegt.

4. Vorrichtung nach einem der Ansprüche 1 bis 3, gekennzeichnet durch
eine Steuerung zum Steuern und Regeln der Heizleistung der Heizeinrichtung (16, 57) derart, daß die in das Material eingebrachte Wärmeenergie während der Verfestigung jeweils einer Mehrzahl von aufeinanderfolgenden Schichten des Objektes (3) konstant ist.

5. Vorrichtung nach einem der Ansprüche 1 bis 4, dadurch gekennzeichnet, daß
die Unterlage (9) eine beheizbare Plattform umfaßt.

6. Vorrichtung zum Herstellen eines dreidimensionalen Objektes durch aufeinanderfolgendes Verfestigen von Schichten eines mittels elektromagnetischer Strahlung oder Teilchenstrahlung verfestigbaren Materials an den dem jeweiligen Querschnitt des Objektes entsprechenden Stellen, mit
einem höhenverstellbaren Träger (9) zum Tragen des Objektes,
einer Vorrichtung zum Aufbringen einer Schicht eines verfestigbaren Materials (13) auf den Träger (9) oder auf eine zuvor gebildete Schicht,
einer Bestrahlungseinrichtung (4) und
einer Steuerung für die Bestrahlungseinrichtung (8) zum Bestrahlen von den dem Objekt (3) entsprechenden Stellen der Schicht, dadurch gekennzeichnet, daß
der Träger (9) als Platte (91) ausgebildet ist und eine Vorrichtung (93) zum Beheizen des Trägers vorgesehen ist, die einen an der dem Objekt (3) abgewandten Unterseite der Platte (91) angebrachten Heizdraht (93) umfaßt.

7. Vorrichtung nach Anspruch 6, dadurch gekennzeichnet, daß der Heizdraht (93) in mäanderförmigen Windungen an der Unterseite der Platte (91) angebracht ist.

8. Vorrichtung nach Anspruch 6 oder 7, dadurch gekennzeichnet, daß eine Heizeinrichtung (16, 57) zum Verfestigen eines das Objekt (3) umschließenden Bereiches des Materials zum Bilden einer Behälterwand (15) vorgesehen ist.

9. Vorrichtung nach einem der Ansprüche 1 bis 8, dadurch gekennzeichnet, daß
die Bestrahlungseinrichtung (4) einen Laser umfaßt.

10. Verfahren zum Herstellen eines dreidimensionalen Objektes, bei dem das Objekt (3) schichtweise dadurch erzeugt wird, daß jeweils eine Schicht aus mittels elektromagnetischer Strahlung oder Teilchenstrahlung verfestigbaren Materials (13) aufgetragen und anschließend an den dem Objekt (3) entsprechenden Stellen durch Bestrahlen verfestigt wird, wobei zur Erzeugung einer Behälterwand (15) für das Material ein das Objekt umschließender Bereich des Materials mitverfestigt wird, wobei die Verfestigung des Bereiches durch Wärmeeinwirkung mittels einer Heizeinrichtung erfolgt,
dadurch gekennzeichnet, daß die Heizleistung der Heizeinrichtung derart geregelt wird, daß die in das Material eingebrachte Wärmeenergie bei der Verfestigung einer Mehrzahl von aufeinanderfolgenden Schichten des Objektes (3) konstant ist.

11. Verfahren nach Anspruch 10, dadurch gekennzeichnet, daß zum Steuern und Regeln der Heizleistung eine speicherprogrammierbare Steuerung verwendet wird.

12. Verfahren nach Anspruch 10 oder 11, dadurch gekennzeichnet, daß als Material ein Pulvermaterial verwendet wird.

## Claims

1. Device for producing a three-dimensional object by successive solidifying of layers of a material which can be solidified by means of electromagnetic radiation or particle radiation at the points corresponding to the respective cross-section of the object, having a height-adjustable underlying support (9), a device for applying (12) a layer of the solidifiable material (13) to the underlying support (9) or to a layer previously formed, an irradiating means (4) and a controller for the irradiating means (8) for irradiating points of the layer corresponding to the object (3) and a heating means (16) for solidifying a region of the material (13) enclosing the object (3) by the action of heat, there being provided a workbench (50) with a cutout (52) corresponding to the enclosing region (15), characterized in that the heating means comprises a heating ring (57) which is arranged underneath the workbench (50), is thermally insulated from the latter, has an inner contour corresponding to the contour of the cutout (52) of the workbench (50) and is arranged in such a way that the heating ring surrounds the cutout (52).

2. Device according to Claim 1, characterized in that the inside diameter of the heating ring (57) corresponds to the diameter of the cutout (52).

3. Device according to Claim 1 or 2, characterized in that the underlying support (9) can be raised into a position in which its surface lies within the cutout (52) substantially in a plane with the surface of the workbench (50).

4. Device according to one of Claims 1 to 3, characterized by a controller for controlling and regulating the heating output of the heating means (16, 57) in such a way that the thermal energy introduced into the material is constant during the solidifying of in each case a plurality of successive layers of the object (3) .

5. Device according to one of Claims 1 to 4, characterized in that the underlying support (9) comprises a heatable platform.

6. Device for producing a three-dimensional object by successive solidifying of layers of a material which can be solidified by means of electromagnetic radiation or particle radiation at the points corresponding to the respective cross-section of the object, having a height-adjustable carrier (9) for carrying the object, a device for applying a layer of a solidifiable material (13) to the carrier (9) or to a layer previously formed, an irradiating means (4) and a controller for the irradiating means (8) for irradiating points of the layer corresponding to the object (3), characterized in that the carrier (9) is designed as a plate (91) and there is provided a device (93) for heating the carrier, which comprises a heating wire (93) attached on the underside of the plate (91) facing away from the object (3).

7. Device according to Claim 6, characterized in that the heating wire (93) is attached in meandering turns on the underside of the plate (91).

8. Device according to Claim 6 or 7, characterized in that a heating means (16, 57) for solidifying a region of the material enclosing the object (3) is provided for forming a container wall (15).

9. Device according to one of Claims 1 to 8 characterized in that the irradiating means (4) comprises a laser.

10. Process for producing a three-dimensional object in which the object (3) is created layer by layer in that in each case a layer of material (13) which can be solidified by means of electromagnetic radiation or particle radiation is applied and subsequently solidified at the points corresponding to the object (3) by irradiating, a region of the material enclosing the object being solidified at the same time to create a container wall (15) for the material, the solidifying of the region being performed by the action of heat by a heating means, characterized in that the heating output of the heating means is regulated in such a way that the thermal energy introduced into the material is constant during the solidifying of a plurality of successive layers of the object (3).

11. Process according to Claim 10, characterized in that a programmable controller is used for controlling and regulating the heating output.

12. Process according to Claim 10 or 11, characterized in that a powder material is used as the material.

## Revendications

1. Dispositif destiné à la fabrication d'un objet tridimensionnel par durcissement successif des couches d'un matériau durcissable par rayonnement électromagnétique ou par radiation de particules sur des zones correspondant à chaque section de l'objet, comprenant
un support (9) réglable en hauteur,
un dispositif d'application (12) d'une couche du matériau durcissable, sur le support (9) ou sur une couche précédemment déposée,
un dispositif de rayonnement (4) et
une unité de commande (8) pour le dispositif de rayonnement, destiné à irradier les zones de la couche correspondant à l'objet (3), et
un dispositif de chauffage (16), destiné à durcir une zone du matériau (13) entourant l'objet (3) sous l'effet de la chaleur, une table de travail (50) étant munie d'une cavité (52) correspondant à la zone périphérique (15),
caractérisé en ce que le dispositif de chauffage comprend un anneau de chauffage (57) monté au-dessous de la table de travail (50) et isolé thermiquement de cette dernière, lequel anneau de chauffage présente un contour intérieur correspondant au contour de la cavité (52) de la table de travail (50) et est disposé de telle sorte que l'anneau de chauffage entoure la cavité (52).

2. Dispositif selon la revendication 1, caractérisé en ce que le diamètre intérieur de l'anneau de chauffage (57) correspond au diamètre de la cavité (52).

3. Dispositif selon la revendication 1 ou 2, caractérisé en ce que le support (9) peut être déplacé vers le haut dans une position, dans laquelle sa surface est située dans la cavité (52) sensiblement dans un même plan avec la surface de la table de travail (50).

4. Dispositif selon l'une quelconque des revendications 1 à 3, caractérisé par une unité de commande destinée à commander et réguler la puissance calorifique du dispositif de chauffage (16, 57), de telle sorte que l'énergie thermique transmise dans le matériau est constante pendant le durcissement de plusieurs couches successives de l'objet (3).

5. Dispositif selon l'une quelconque des revendications 1 à 4, caractérisé en ce que le support (9) comprend un plateau susceptible d'être chauffé.

6. Dispositif destiné à la fabrication d'un objet tridimensionnel par durcissement successif des couches d'un matériau durcissable par rayonnement épectromagnétique ou par radiation de particules sur des zones correspondant à chaque section de l'objet, comprenant
un support (9) réglable en hauteur, destiné à porter l'objet,
un dispositif destiné à l'application d'une couche d'un matériau durcissable sur le support (9) ou sur une couche précédemment déposée,
un dispositif de rayonnement (4) et
une unité de commande (8) pour le dispositif de rayonnement, destiné à irradier les zones de la couche correspondant à l'objet (3),
caractérisé en ce que le support (9) est conçu sous forme de plateau (91) et qu'il est prévu de monter un dispositif (93), destiné au chauffage du support, lequel dispositif comprend un filament incandescent (93) monté sur la face inférieure du plateau (91), opposée à l'objet (3).

7. Dispositif selon la revendication 6, caractérisé en ce que le filament incandescent (93) est posé sur la face inférieure du plateau (91) en formant des enroulements en méandres.

8. Dispositif selon la revendication 6 ou 7, caractérisé en ce qu'il est prévu de monter un dispositif de chauffage (16, 57), destiné à durcir une zone du matériau entourant l'objet (3) pour former une paroi de conteneur (15).

9. Dispositif selon l'une quelconque des revendications 1 à 8, caractérisé en ce que le dispositif de rayonnement (4) comprend un laser.

10. Procédé de fabrication d'un objet tridimensionnel, dans lequel l'objet (3) est réalisé couche par couche, du fait que l'on dépose chaque fois une couche d'un matériau (13) durcissable par rayonnement électromagnétique ou par radiation de particules et ladite couche est ensuite durcie par irradiation sur les zones correspondant à l'objet (3), une zone de matériau entourant l'objet étant durcie en même temps pour former une paroi de conteneur (15) pour le matériau, le durcissement étant exécuté dans ladite zone sous l'effet de la chaleur dégagée par un dispositif de chauffage,
caractérisé en ce que la puissance calorifique du dispositif de chauffage est régulée de telle sorte que l'énergie thermique transmise dans le matériau est constante pendant le durcissement de plusieurs couches successives de l'objet (3).

11. Procédé selon la revendication 10, caractérisé en ce que la commande et le réglage de la puissance calorifique sont assurés par une unité de commande à mémoire programmable.

12. Procédé selon la revendication 10 ou 11, caractérisé en ce que le matériau utilisé est un matériau en poudre.
